# EUROPEAN PATENT SPECIFICATION

(11) **EP 2 235 560 B1**
(45) Date of publication and mention of the grant of the patent: **21.11.2012**
(21) Application number: 08864770.6
(22) Date of filing: 19.12.2008
(51) Int. Cl.: G01S 13/89

(54) **DETECTING CONCEALED OBJECTS USING ELECTROMAGNETIC WAVES**
DETEKTION VON VERBORGENEN OBJEKTEN UNTER VERWENDUNG VON ELEKTROMAGNETISCHEN WELLEN
DÉTECTION D'OBJETS CACHÉS À L'AIDE D'ONDES ÉLECTROMAGNÉTIQUES

(30) Priority: 21.12.2007 EP 07123908
(43) Date of publication of application: 06.10.2010
(73) Proprietor: Nederlandse Organisatie voor Toegepast -Natuurwetenschappelijk Onderzoek TNO, 2628 VK Delft (NL)
(72) Inventor: DE JONG, Ard-Jan, NL-2548 SN Den Haag (NL); KLEIJWEG, Johannes Cornelis Maria, NL-2498 ZC Den Haag (NL); HUIZING, Albert Gezinus, NL-2253 JT Voorschoten (NL)
(74) Representative: Jansen, Cornelis Marinus
(86) International application number: PCT/NL2008/050835
(87) International publication number: WO 2009/082223

(56) References cited:
- GB-A- 2 418 552
- US-A- 4 495 500
- US-A- 4 513 748
- US-A1- 2005 128 123
- US-A1- 2006 284 757
- US-A1- 2007 188 370

## Description

The present invention relates to detecting concealed objects using electromagnetic waves. More in particular, the present invention relates to a device and method for detecting objects located behind an obstruction, such as a wall, ceiling, or floor, and distinguishing those objects from objects located in front of the obstruction.

It is known to detect objects using a detection device operating at microwave frequencies, even if those objects are located behind an obstruction, such as a wall. International Patent Application WO 97/14941, for example, discloses a passive receiver for detecting self emitted thermal radiation in the microwave frequency range. The thermal radiation may penetrate materials, such as porcelain clad insulators. WO 97/14941 also mentions locating people inside buildings or detecting fires or hot spots in walls or ceilings while using a frequency range between 0.5 GHz and 16 GHz.

Although the passive device of WO 97/14941 may produce satisfactory results, better results may be achieved if an active device is used which radiates microwaves and detects reflected microwaves. The power of the reflected microwave radiation will generally be significantly greater than the power of the thermal radiation produces by the objects, resulting in a more reliable detection and the possibility of making better images of the objects.

However, using a known (active or passive) detection device to detect objects located behind an obstruction has the disadvantage that those "concealed" objects are virtually indistinguishable from objects which are in clear view. In other words, it is extremely difficult to determine whether a particular object is located behind the obstruction or in front of the obstruction. The reason for this is that the detection device will detect radiation originating from both objects behind the obstruction and objects in front of the obstruction. When a passive detection device is used these two types of objects are typically indistinguishable, while an active detection device is, in principle, capable of making a distinction on the basis of travel times of the radiated microwaves ("ranging"), provided that a suitable waveform is used. However, if objects are located close to the obstruction, the difference in travel times between concealed and visible objects may be small, making the distinction difficult.

It has been suggested to improve the accuracy of ranging by using multiple frequencies. International Patent Application WO 2005/104417, for example, discloses a multi-frequency continuous wave (CW) radar for through-the-wall motion detection and ranging. Two radar signals having different frequencies are transmitted through a wall and their return signals are received. The phase differences between the outgoing radar signals and the corresponding return signals are analysed to determine both the existence of motion and the distance of the moving object from the antenna. The two frequencies are approximately 1 MHz apart. If two objects are close to but on either side of the obstruction, this known device may not be able to determine which object is in front of and which object is behind the obstruction since this known device utilises phase differences, which are in practice difficult to measure accurately. In addition, the phase differences may be influenced by the obstruction, thus distorting the range information. In other words, the device of WO 2005/104417 will not always be able to distinguish between visible and concealed objects.

United States Patent Application US 2005/128123 discloses a system and method for suppressing motion artefacts introduced by movement of a radar detection system. This known system includes a Doppler radar module configured to transmit a microwave signal towards an object and to receive the reflected microwave signals from the object and from a living subject positioned behind the object. The known system also includes an ultrasonic reference module configured to transmit an ultrasonic reference signal towards the object and to receive the reflected ultrasonic reference signal from the object. By comparing phase properties of the two reflected signals, a signal processor suppresses motion artefacts generated by movement of the Doppler radar module to identify the presence of the living subject behind the object. This known system appears to be incapable of distinguishing between living subjects located before or behind the object.

It is an object of the present invention to overcome these and other problems of the Prior Art and to provide a device and method for detecting objects which allows a clear distinction to be made between objects in front of and objects behind an obstruction.

Accordingly, the present invention provides a device for detecting objects through an obstruction according to claim 1.
By using at least two distinct frequencies, of which the first one is substantially capable and the second one is substantially incapable of penetrating the obstruction and reaching an object located behind it, a clearly detectable distinction can be made between objects behind and objects in front of the obstruction. Objects in front of the obstruction will be detected by both detection units and will therefore be shared by their detection signals, while objects behind the obstruction will only be detected by the first detection unit operating at the first frequency and will therefore not be shared by the detection signals of both detection units.

As mentioned above, the second frequency is chosen so as to cause a relatively high attenuation in the obstruction, that is, such that the microwaves having the second frequency are substantially incapable of penetrating the obstruction, in contrast to the first frequency. In practice, this will mean that the second frequency has a much higher attenuation than the first frequency, which typically is the case when the second frequency is substantially higher than the first frequency.

The device of the present invention may determine distances ("ranges") using travel times of the microwaves. However, the present invention preferably uses frequency differences (as will be explained later) rather than phase differences or travel times to determine distances.

The detection units are arranged for operating at a certain (distinct) frequencies and producing respective detection signals, that is, arranged for receiving microwaves having certain frequencies.

In some embodiments, the detection units may be constituted by a single, integrated detection unit operating at two or more distinct microwave frequencies. It is noted that the term "microwave frequency" is generally defined as a frequency between 0.3 GHz - 300 GHz and that microwaves are electromagnetic waves.

It is preferred that the first microwave frequency is substantially lower than the second microwave frequency. That is, the microwave frequency is preferably less than half the second microwave frequency, more preferably less than a quarter of the second microwave frequency and possibly even less than one-eighth of the second microwave frequency. This ensures a good separation between the attenuation properties of the two frequencies. Accordingly, the difference between the two frequencies will be substantially larger than 1 MHz and will typically at least be equal to several GHz, for example at least 2 to 5 GHz.

In a particularly advantageous embodiment, the first microwave frequency lies between 1 GHz and 10 GHz, preferably between 1 GHz and 3 GHz, while the second microwave frequency lies between 10 GHz and 50 GHz, preferably between 10 GHz and 30 GHz, although other (overlapping or non-overlapping) ranges are also possible. It has been found that obstructions, such as wall and ceilings, have frequency-dependent attenuations. The attenuation of a concrete sample, for example, was approximately 2 dB at 1 GHz, 23 dB at 10 GHz, and 46 dB at 20 GHz, while a wooden sample had similar attenuations at (much) higher frequencies. Accordingly, frequencies below 5-10 GHz will experience only a small attenuation, while frequencies above 10 GHz will be strongly attenuated. This allows a distinction to be made between the returned microwaves, in particular as the microwaves passing through the obstruction will be attenuated twice.

In a particularly preferred embodiment, at least one of the first detection unit and the second detection unit is a frequency-modulated continuous wave radar unit, the respective microwave frequency being an average frequency. As is well known, frequency-modulated continuous wave (FMCW) techniques allow range (distance) determination on the basis of frequency shifts of the received signal relative to the transmitted signal. The frequency modulation preferably has a predetermined bandwidth around a central or average frequency, which in that case coincides with the first and second microwave frequency mentioned above.

Advantageously, the processing unit may be arranged for producing an image of the objects, and the device may further comprise a display unit for displaying the image. This allows the object detection results to be displayed.

It is further preferred that the processing unit is arranged for ignoring objects by omitting these objects from the image. That is, the objects in front of the obstruction, which have been detected by both detection units, are omitted from the image produced so as to show the "concealed" objects only.

The first detection unit and the second detection unit preferably have a substantially equal transmission power. This allows the attenuation introduced by the obstacle to have an easily discernable impact on the detection of the transmitted microwaves.

The device according to the present invention preferably is an active radar device: the device emits microwaves and detects reflected microwaves. In some embodiments, however, the device could be passive and only detect radiation, without transmitting any microwaves.

The present invention also provides a method of detecting objects through an obstruction, according to claim 11.
The receiving steps may be carried out simultaneously or consecutively. It is noted that a relatively low and a relatively high attenuation may imply that the reflections produced by the respective microwaves have clearly distinguishable attenuations, making it possible to distinguish the reflections produced by objects located behind the obstruction from objects located in front of the obstruction.

It is preferred that the first microwave frequency is substantially smaller than the second microwave frequency, for example five or ten times smaller. A third microwave frequency may additionally be used but is not essential.

In active embodiments, the steps of receiving reflected microwaves may be preceded by a step of transmitting microwaves having a first microwave frequency and a step of transmitting microwaves having a second microwave frequency respectively. The two transmission steps are preferably carried out simultaneously, but may also be carried out consecutively or alternately.

In an advantageous embodiment, at least one of the steps of transmitting microwaves involves transmitting frequency-modulated continuous waves, the respective microwave frequency being an average frequency. It is preferred that both transmitting steps involve transmitting frequency-modulated continuous waves (FMCW), more in particular frequency-modulated continuous microwaves. Using FMCWs offers the advantage that range detection is possible.

The present invention additionally provides a computer program product for carrying out the processing step and the ignoring step of the method defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:
Figs. 1a & 1b schematically show an arrangement in which a device according to the present invention is utilised.
Fig. 2 schematically shows an exemplary embodiment of a device according to the present invention.
Figs. 3a-3c schematically show the detection of objects in accordance with the present invention.
Fig. 4 schematically shows an exemplary pair of frequencies in accordance with the present invention.
Fig. 5 schematically shows an exemplary pair of frequencies in a frequency modulated embodiment of the present invention.

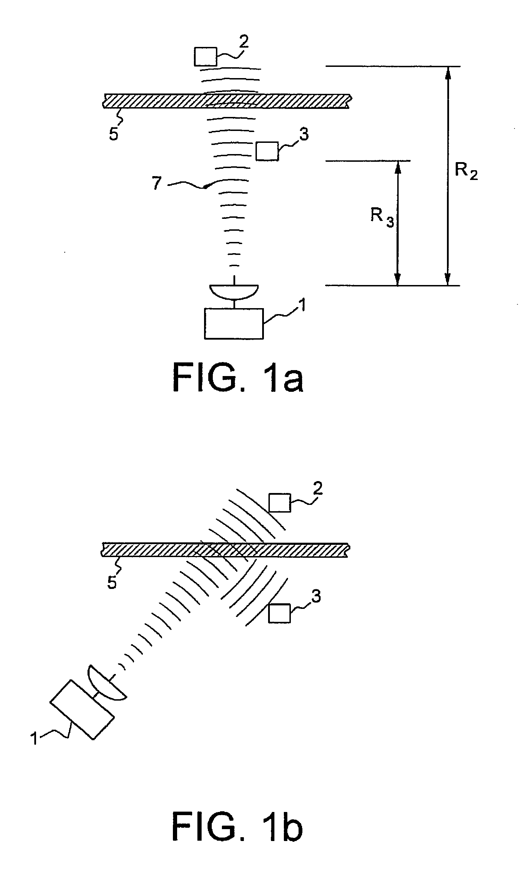

The merely exemplary arrangement shown in Fig. 1 a comprises a device 1 according to the present invention, two objects 2 and 3, and an obstruction 5. Of the two objects, one is located at the same side as the device 1 and is therefore referred to as the "visible" object 3. The other object is located behind the obstruction 5 (as seen from the device 1) and is therefore referred to as the "concealed" or "invisible" object 2. The obstruction 5 may be a wall, ceiling, floor, fence or other article hiding the object 2 from view. Although in the present example only one obstruction and only two objects are shown, a plurality of obstructions and/or objects may be present.

When in use, the device 1 emits electromagnetic waves (microwaves) 7 towards the objects 2, 3. Part of these waves will be reflected (or scattered) by the object 3 and be detected by the device 1. If pulsed waves are used, the time lag between transmission and reception of the waves will be indicative of the distance or range R₃ of the object 3 relative to the device 1.

Another part of the electromagnetic waves transmitted by the device 1 will penetrate the obstruction 5 and be reflected (or scattered) by the object 2, which is located at a distance or range R₂ from the device 1. Part of the reflected waves will again pass through the obstruction 5 and be detected by the device 1. In addition, the device 1 will detect electromagnetic waves reflected or scattered by the obstruction 5. If no distance measurement is used, it will be impossible to determine whether the objects 2 and 3 are located in front of or behind the obstruction. Even if a distance measurement is used, it will be difficult to distinguish between "visible" and "concealed" objects, in particular when the objects are both located close to the obstruction 5 (and the ranges R₂ and R₃ are almost equal) and/or when the device 1 is not located substantially perpendicularly relative to the obstruction 5, as will later be discussed with reference to Fig. 1b. The distance measurement is further hampered by the fact that the electromagnetic waves may be reflected by the wall and then be re-reflected by the objects, leading to "false images" and hence incorrect distance measurements. Accordingly, distance measurements are typically not suitable for distinguishing between the "invisible" object 2 and the "visible" object 3.

The present invention solves this problem by exploiting the fact that the attenuation of the obstruction is frequency-dependent, and that different frequencies will therefore lead to a different attenuation of the electromagnetic waves which are reflected by the "concealed" object 2. In accordance with the present invention, therefore, the device 1 utilizes at least two distinct frequencies having different attenuations at the obstruction 5. Accordingly, a first frequency is subjected to a relatively low attenuation while a second frequency is subjected to a relatively high attenuation. Preferably, the first microwave frequency is chosen so as to penetrate the obstruction while the second microwave frequency is chosen so as not to penetrate the obstruction. That is, the first frequency is subjected to a low attenuation of, for example, less than 10 dB, preferably less than 5 dB, while the second frequency is virtually blocked, being subjected to an attenuation of, for example, more than 20 dB, preferably more than 40 dB. This allows a clear distinction to be made between the electromagnetic waves reflected or scattered by the two objects.

A third frequency which is subjected to an intermediate attenuation may additionally be used, however, two distinct frequencies are typically sufficient, provided the frequencies are sufficiently far apart, for example at least 0.5 GHz but preferably at least 1 GHz apart. Accordingly, the first frequency preferably is substantially lower than the second frequency. If a third frequency is used, it may be chosen in dependence on the material of the obstruction so as to provide a detectable attenuation of the obstruction.

As mentioned above obstructions, such as wall and ceilings, have frequency-dependent attenuations. The attenuation of a concrete sample, for example, was approximately 2 dB at 1 GHz, 23 dB at 10 GHz, and 46 dB at 20 GHz, while a wooden sample had similar attenuations at (much) higher frequencies. Accordingly, frequencies below 5-10 GHz will experience only a small attenuation, while frequencies above 10 GHz will be strongly attenuated. This allows a distinction to be made between the returned microwaves, in particular as the microwaves passing through the obstruction will be attenuated twice.

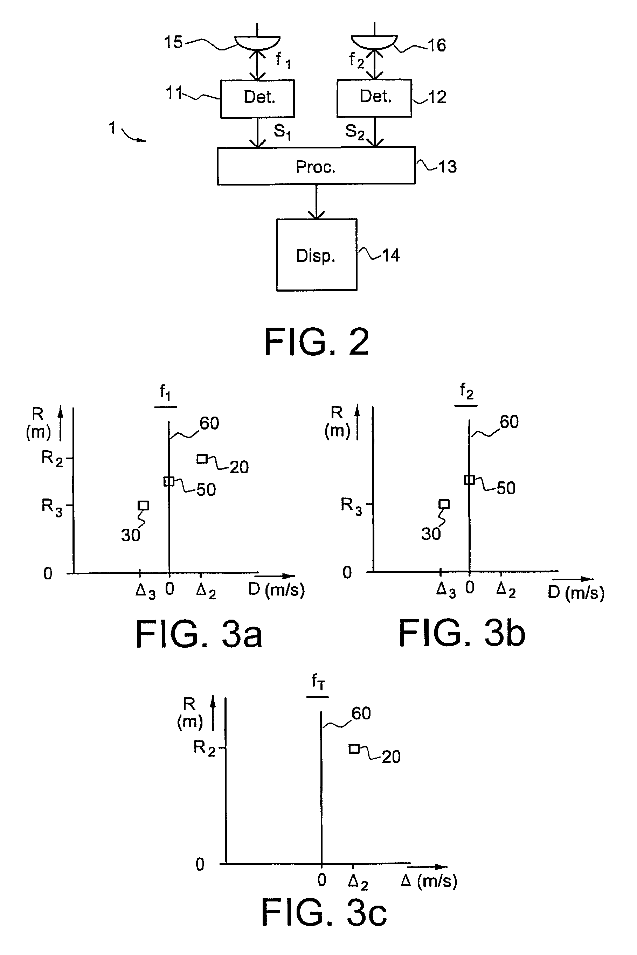

Accordingly, the first microwave frequency preferably lies between 1 GHz and 10 GHz, more preferably between 1 GHz and 3 GHz; while the second microwave frequency preferably lies between 10 GHz and 50 GHz, more preferably between 10 GHz and 30 GHz. The device 1 may transmit the two frequencies simultaneously or alternately. An embodiment of the device 1 will later be explained in more detail with reference to Fig. 2.

In the arrangement of Fig. 1b, the device 1 is not arranged perpendicularly with respect to the obstruction 5 but at an acute angle. As a result, part of the microwaves transmitted by the device 1 will penetrate the obstruction and be reflected by the "invisible" object 2, while part will be reflected by the obstruction towards the "visible" object 3 and again be reflected by the object 3. Accordingly, the device 1 will receive microwaves reflected by both the object 2 and the object 3, as in Fig. 1a, but in the case of Fig. 1b the distances travelled by the waves are approximately equal. Accordingly, any distance measurement will fail to correctly identify object 2 as the "invisible" object. The present invention solves this problem by using at least two distinct frequencies having different attenuations.

The device 1 shown merely by way of non-limiting example in Fig. 2 comprises a first detection unit 11, a second detection unit 12, a processing unit 13, a display unit 14, a first antenna unit 15 and a second antenna unit 16. The antenna units 15 and 16 are, in the embodiment shown, used for both transmitting and receiving electromagnetic waves. In an alternative embodiment (not shown), separate antennas are used for transmitting and receiving, bringing the total number of antennas up to four. In another alternative embodiment (not shown), the antennas 15 and 16 are combined into a single, integrated antenna capable of operating at two distinct frequencies, reducing the number of antennas to one. Combinations of the various embodiments are also possible. Instead of the active embodiments discussed above, passive embodiments may be used in which the device does not transmit and only receives microwaves.

The first detection unit 11 is arranged for operating at a first microwave frequency f₁ and producing first detection signals S₁, while the second detection unit 12 is arranged for operating at a second microwave frequency f₂ and producing second detection signals S₂. In the embodiment shown, the detection units are also arranged for producing the electromagnetic waves to be transmitted. In alternative embodiments, separate generator units could be provided for this purpose.

The detection signals S₁ and S₂ are produced in response to the detection of reflected electromagnetic waves having frequencies f₁ and f₂ respectively. These detection signals therefore represent reflected electromagnetic waves and hence also represent objects causing the reflection of these electromagnetic waves. The detection of electromagnetic signals, such as radar signals, is known *per se.*

The processing unit 13 is arranged for processing the first detection signals S₁ and the second detection signals S₂ so as to detect objects 2. That is, the processing carried out by the processing unit allows identifying and recognising objects, and may result in image signals that allow the objects to be shown on a screen of the display unit 14. The processing unit 13 is further arranged for establishing which objects are not shared by the first detection signals and the second detection signals and are therefore located behind the obstruction, as will be explained later with reference to Figs. 3a-3c. The present invention provides the ability to distinguish between objects are shared by the high and low attenuation detection signals, which objects are located in front of the obstruction (or are the obstruction itself), and objects only represented by the low attenuation detection signals, which are located behind the obstruction.

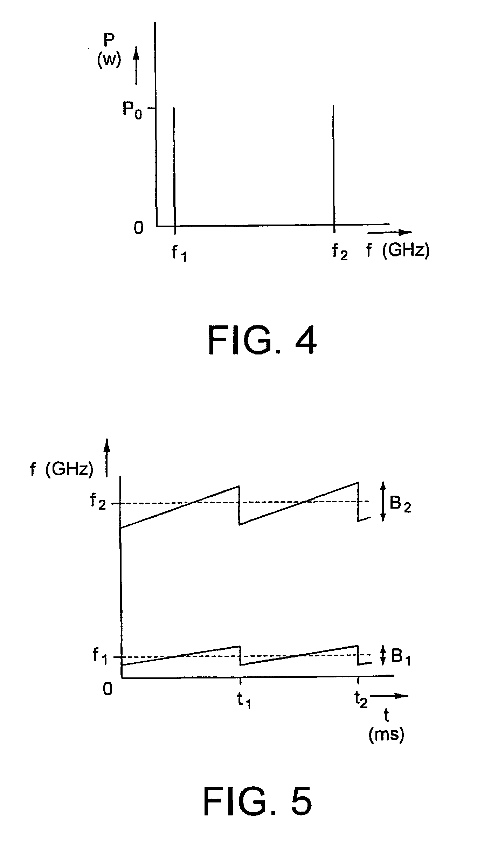

As will later be explained with reference to Fig. 5, the frequency of the antennas need not be fixed. Instead, the transmission frequencies may be modulated, in which case the frequencies f₁ and f₂ mentioned above may be average or centre frequencies.

It is noted that the device 1 may measure the distance of the objects (ranges R₂ and R₃ in Fig. 1) by measuring, for example, pulse travel times in case pulsed waves are used, or frequency shifts if frequency-modulated waves are used (Fig. 5). However, typical embodiments of the present invention do not use phase shifts to measure ranges.

The procedure of distinguishing between objects in front of an obstruction and objects behind an obstruction in accordance with the present invention is illustrated in Figs. 3a-3c. In the exemplary procedure shown, frequency-modulated (FM) microwaves are used. As is well known, FM microwaves result in a Doppler shift (frequency shift) when the object being detected moves radially relative to the detection device, that is, the device 1 of Figs. 1 and 2. Each of these Figs. shows a vertical line 60 representing the distance (range R - vertical axis) at zero Doppler shift, that is, when the object is (radially) stationary relative to the device. If the object is not stationary, the representation of the objects will shift relative to the line 60 (Doppler shift Δ or object velocity - horizontal axis).

Fig. 3a shows the objects as detected at the first, lower frequency f₁ which penetrates the obstruction (low attenuation). The representation 20 of the "invisible" object 2 is shown to be located at a first range R₂ while the representation 30 of the "visible" object 3 is shown to be located at a second range R₃. Both representations are offset relative to the line 60, indicating that both objects are moving. It will be clear that each representation would be located on the line 60 if the respective object were stationary. The representation 50 of the obstruction (5 in Figs. 1a and 1b) is located on the line 60, assuming that the obstruction and the device (1 in Figs. 1a and 1b) are both stationary, at least relative to each other.

As the lower frequency f₁ fully penetrates the obstruction and reaches the object 2 behind the obstruction, both objects 2 and 3 are represented in Fig. 3a, which may correspond with an image displayed on a display unit (14 in Fig. 2). As can be seen from Fig. 3a, both the "visible" object and the "invisible" or "concealed" object are represented, making it difficult to determine which object is really concealed behind the obstruction.

Fig. 3b shows the objects as detected at the second, higher frequency f₂ which fails to fully penetrate the obstruction and reach the "invisible" object 2 (high attenuation). In this case, only the "visible" object 3 is detected, resulting in a representation 30. It is noted that the representation 20 of the "invisible" object 2 is absent from Fig. 3b.

Comparing Figs. 3a and 3b makes it possible to determine which object is located in front of the obstruction and which object is concealed behind the obstruction. As representations 30 and 50 are present in Fig. 3b, which shows the objects detected at the frequency which fails to penetrate the obstruction, these representations 30 and 50 is "ignored" (that is, removed and/or not taken into consideration), resulting in Fig. 3c which shows a representation of the "concealed" object only.

Establishing which objects are not shared by the first detection signals and the second detection signals (and are therefore located behind the obstruction) can be carried out by a comparison of the detection signals (or by a comparison of suitable signals derived from the detection signals) for both frequencies. Objects which are not shared by the first detection signals and the second detection signals will be unique to the first detection signals.

In some cases, the hidden object 2 may be just detectable at the second, higher frequency f₂ and therefore its representation 20 may be present in Fig. 3b. However, in such cases the difference in attenuation and hence in signal strength will allow to determine which object is located behind the obstruction.

Fig. 4 schematically shows two frequencies f₁ and f₂ having approximately the same power P₀, the horizontal axis indicating the frequency in GHz and the vertical axis indicating the power in W. This illustrates the preferred (active) embodiment in which each detection unit has the same transmission power.

Fig. 5 shows the frequencies f₁ and f₂ shown as a function of time in embodiments in which frequency modulation (FM) techniques are used, preferably frequency-modulated continuous wave (FMCW) techniques. The horizontal axis indicated the time t in ms, while the vertical indicates the frequency f in GHz. It can be seen that the lower frequency increases linearly between t = 0 and t = t₁, falls back to its original value at t = t₁, and then increases again, resulting in a bandwidth B₁ centred on the frequency f₁. Similarly, the higher frequency increases linearly between t = 0 and t = t₁, falls back to its original value at t = t₁, and then increases again, resulting in a bandwidth B₂ centred on the frequency f₂. Using well known techniques, FM waves may be used to determine both speed and range.

The present invention is based upon the insight that microwaves passing through an obstruction are subjected to a frequency-dependent attenuation. The present invention benefits from the further insight that differences in the attenuation of transmitted microwaves can be used to determine whether an object is located in front of or behind an obstruction.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A device (1) for detecting objects (2) located behind an obstruction (5), the device comprising:
• a first detection unit (11) arranged to detect reflections of transmitted electromagnetic waves having a first frequency (f₁) and producing first detection signals (S i),
• a second detection unit (12) arranged to detect reflections of transmitted electromagnetic waves having a second frequency (f₂) and producing second detection signals (S₂), and
• a processing unit (13) for processing the first detection signals (S₁) and the second detection signals (S₂) so as to detect objects (2),
**characterised in that**
• the first frequency (f₁) and the second frequency (f₂) are mutually different microwave frequencies, at which attenuations of the electromagnetic waves at the obstruction are mutually different, the attenuation at the first frequency being lower than at the second frequency;
• the processing unit (13) is arranged to produce an image of objects (2) detected from the reflections and to omit from the image objects that have been detected by both the first and second detection unit.

2. The device according to claim 1, wherein the first microwave frequency (f₁) is substantially lower than the second microwave frequency (f₂).

3. The device according to claim 1 or 2, wherein the first microwave frequency (f₁) lies between 1 GHz and 10 GHz, preferably between 1 GHz and 3 GHz.

4. The device according to claim 1, 2 or 3, wherein the second microwave frequency (f₂) lies between 10 GHz and 50 GHz, preferably between 10 GHz and 30 GHz.

5. The device according to any of the preceding claims, wherein at least one of the first detection unit (11) and the second detection unit (12) is a frequency-modulated continuous wave radar unit, the respective microwave frequency (f₁, f₂) being an average frequency.

6. The device according to any of the preceding claims, wherein the device further comprises a display unit (14) for displaying the image.

7. The device according to any of the preceding claims, wherein the processing unit (13) is arranged to use a difference between attenuation at the first and second frequencies to determine whether an object is located behind the obstruction.

8. The device according to any of the preceding claims, wherein the first detection unit (11) and the second detection unit (12) have a substantially equal transmission power.

9. The device according to any of the preceding claims, comprising a third detection unit arranged for operating at a third microwave frequency.

10. The device according to any of the preceding claims, which is an active radar device.

11. A method of detecting objects (2) through an obstruction (5), the method comprising the steps of:
• receiving reflected electromagnetic waves having a first frequency (f₁) from objects concealed by an obstruction;
• detecting the reflections to form first detection signals (S₁),
• detecting the reflections to produce first detection signals (S₁),
• receiving reflected electromagnetic waves having a second frequency (f₂);
• detecting the reflections to produce second detection signals (S₂) to produce second detection signals (S₂),
• processing the first detection signals (S₁) and the second detection signals (S₂) so as to detect objects (2, 3), and
**characterized in that** the first and second frequencies are mutually different microwave frequencies, at which attenuations of the electromagnetic waves at the obstruction are mutually different, the attenuation at the first frequency being lower than at the second frequency; and **in that** the method comprises the steps of
- producing an image of the objects (2) detected from the reflections and
- omitting from the image objects that have been detected by both the first and second detection unit.

12. The method according to claim 11, wherein the obstruction is a wall, ceiling floor or fence hiding the object from view.

13. The method according to claim 12, wherein the first frequency (f₁) lies between 1 GHz and 10 GHz, preferably between 1 GHz and 3 GHz and the second frequency (f₂) lies between 10 GHz and 50 GHz, preferably between 10 GHz and 30 GHz.

14. The method according to any one of claims 11 to 13, wherein the steps of receiving reflected microwaves having a first microwave frequency (f₁) and of receiving reflected microwaves having a second microwave frequency (f₂) are preceded by the step of transmitting microwaves having a first microwave frequency (f₁) and the step of transmitting microwaves having a second microwave frequency (f₂) respectively.

15. The method according to claim 14, wherein at least one of the steps of transmitting microwaves involves transmitting frequency-modulated continuous waves, the respective microwave frequency (f₁, f₂) being an average frequency.

16. A computer program product for carrying out the processing step and the establishing step of the method according to any of claims 11-15.

## Patentansprüche

1. Vorrichtung (1) zur Detektion von Objekten (2), die hinter einem Hindernis (5) angeordnet sind, wobei die Vorrichtung Folgendes umfasst:
• eine erste Detektionseinheit (11), angeordnet, um Reflexionen von übertragenen elektromagnetischen Wellen, die eine erste Frequenz (f₁) aufweisen und erste Detektionssignale (S₁) erzeugen, zu detektieren;
• eine zweite Detektionseinheit (12), angeordnet, um Reflexionen von übertragenen elektromagnetischen Wellen, die eine zweite Frequenz (f₂) aufweisen und zweite Detektionssignale (S₂) erzeugen, zu detektieren, und
• eine Verarbeitungseinheit (13) zum Verarbeiten der ersten Detektionssignale (S₁) und der zweiten Detektionssignale (S₂), um Objekte (2) zu detektieren,
**dadurch gekennzeichnet, dass**
die erste Frequenz (f₁) und die zweite Frequenz (f₂) voneinander verschiedene Mikrowellenfrequenzen sind, bei denen Abschwächungen der elektromagnetischen Wellen am Hindernis voneinander verschieden sind, wobei die Abschwächung bei der ersten Frequenz niedriger ist als bei der zweiten Frequenz;
die Verarbeitungseinheit (13) angeordnet ist, um ein Bild von Objekten (2), die anhand der Reflexionen detektiert werden, zu erzeugen, und von den Bildern Objekte wegzulassen, die von der ersten und der zweiten Detektionseinheit detektiert wurden.

2. Vorrichtung nach Anspruch 1, wobei die erste Mikrowellenfrequenz (f₁) wesentlich niedriger als die zweite Mikrowellenfrequenz (f₂) ist.

3. Vorrichtung nach Anspruch 1 oder 2, wobei die erste Mikrowellenfrequenz (f₁) zwischen 1 GHz und 10 GHZ, vorzugsweise zwischen 1 GHz und 3 GHz, liegt.

4. Vorrichtung nach Anspruch 1, 2 oder 3, wobei die zweite Mikrowellenfrequenz (f₂) zwischen 10 GHz und 50 GHZ, vorzugsweise zwischen 10 GHz und 30 GHz, liegt.

5. Vorrichtung nach einem der vorhergehenden Ansprüche, wobei mindestens eine der ersten Detektionseinheit (11) und der zweiten Detektionseinheit (12) eine frequenzmodulierte Dauerstrichradareinheit (continuous wave radar unit) ist, wobei die jeweilige Mikrowellenfrequenz (f₁, f₂) eine Durchschnittsfrequenz ist.

6. Vorrichtung nach einem der vorhergehenden Ansprüche, wobei die Vorrichtung ferner eine Anzeigeeinheit (14) umfasst, zum Anzeigen des Bildes.

7. Vorrichtung nach einem der vorhergehenden Ansprüche, wobei die Verarbeitungseinheit (13) geeignet ist, einen Unterschied zwischen der Abschwächung bei den ersten und zweiten Frequenzen zu verwenden, um festzustellen, ob sich hinter dem Hindernis ein Objekt befindet.

8. Vorrichtung nach einem der vorhergehenden Ansprüche, wobei die erste Detektionseinheit (11) und die zweite Detektionseinheit (12) eine im Wesentlichen gleiche Übertragungsleistung haben.

9. Vorrichtung nach einem der vorhergehenden Ansprüche, umfassend eine dritte Detektionseinheit, die geeignet ist, bei einer dritten Mikrowellenfrequenz betrieben zu werden.

10. Vorrichtung nach einem der vorhergehenden Ansprüche, die eine aktive Radarvorrichtung ist.

11. Verfahren zum Detektieren von Objekten (2) durch ein Hindernis (5), wobei das Verfahren folgende Schritte umfasst:
• Empfangen reflektierter elektromagnetischer Wellen mit einer ersten Frequenz (f₁) von Objekten, die durch ein Hindernis verborgen sind;
• Detektieren der Reflexionen, um erste Detektionssignale (S₁) zu bilden;
• Detektieren der Reflexionen, um erste Detektionssignale (S₁) zu erzeugen;
• Empfangen reflektierter elektromagnetischer Wellen mit einer zweiten Frequenz (f₂);
• Detektieren der Reflexionen zum Erzeugen zweiter Detektionssignale (S₂) zum Erzeugen zweiter Detektionssignale (S₂);
• Verarbeiten der ersten Detektionssignale (S₁) und der zweiten Detektionssignale (S₂), um Objekte (2, 3) zu entdecken, und
**dadurch gekennzeichnet, dass** die ersten und zweiten Frequenzen voneinander verschiedene Mikrowellenfrequenzen sind, bei denen Abschwächungen der elektromagnetischen Wellen am Hindernis voneinander verschieden sind, wobei die Abschwächung bei der ersten Frequenz niedriger ist als bei der zweiten Frequenz; und dass das Verfahren folgende Schritte umfasst:
- Erzeugen eines Bildes der anhand der Reflexionen detektierten Objekte (2) und
- Weglassen der Objekte, die von der ersten und der zweiten Detektionseinheit detektiert wurden, von dem Bild.

12. Verfahren nach Anspruch 11, wobei das Hindernis eine Wand, ein Deckenboden oder ein Zaun ist, die bzw. der das Objekt verbirgt.

13. Verfahren nach Anspruch 12, wobei die erste Frequenz (f1₎ zwischen 1 GHz und 10 GHZ, vorzugsweise zwischen 1 GHz und 3 GHz, liegt, und die zweite Mikrowellenfrequenz (f₂) zwischen 10 GHz und 50 GHZ, vorzugsweise zwischen 10 GHz und 30 GHz, liegt.

14. Verfahren nach einem der Ansprüche 11 bis 13, wobei den Schritten des Empfangs reflektierter Mikrowellen mit einer ersten Mikrowellenfrequenz (f₁) und des Empfangs reflektierter Mikrowellen mit einer zweiten Mikrowellenfrequenz (f₂) der Schritt der Übertragung von Mikrowellen mit einer ersten Mikrowellenfrequenz (f₁) bzw. der Schritt der Übertragung von Mikrowellen mit einer zweiten Mikrowellenfrequenz (f₂) vorangeht.

15. Verfahren nach Anspruch 14; wobei mindestens einer der Schritte der Übertragung von Mikrowellen die Übertragung frequenzmodulierter Dauerstriche (continuous waves) mit sich bringt, wobei die jeweilige Mikrowellenfrequenz (f₁, f₂) eine Durchschnittsfrequenz ist.

16. Computerprogrammprodukt zum Ausführen des Verarbeitungsschritts und des Einrichtungsschritts des Verfahrens nach einem der Ansprüche 11-15.

## Revendications

1. Dispositif (1) de détection d'objets (2) situés derrière un obstacle (5), ledit dispositif comprenant :
- une première unité de détection (11) agencée de manière à détecter les réflexions d'ondes électromagnétiques émises à une première fréquence (f₁) et produisant des premiers signaux de détection (S₁),
- une deuxième unité de détection (12) disposée de manière à détecter les réflexions d'ondes électromagnétiques émises à une deuxième fréquence (f₂) et produisant des deuxièmes signaux de détection (S₂), et
- une unité de traitement (13) destinée à traiter les premiers signaux de détection (S₁) et les deuxièmes signaux de détection (S₂) de manière à détecter les objets (2),
**caractérisé en ce que**
- la première fréquence (f₁) et la deuxième fréquence (f₂) sont des hyperfréquences différentes l'une de l'autre pour lesquelles l'atténuation des ondes électromagnétiques au niveau de l'obstacle est différente, l'atténuation à la première fréquence étant inférieure à celle à la deuxième fréquence ;
- l'unité de traitement (13) est agencée de manière à produire, à partir des réflexions, une image des objets (2) détectés et à ne pas faire figurer sur l'image les objets qui ont été détectés à la fois par la première et par la deuxième unité de détection.

2. Dispositif selon la revendication 1, dans lequel la première hyperfréquence (f₁) est sensiblement inférieure à la deuxième hyperfréquence (f₂).

3. Dispositif selon la revendication 1 ou la revendication 2, dans lequel la première hyperfréquence (f₁) se situe entre 1 GHz et 10 GHz, de préférence entre 1 GHz et 3 GHz.

4. Dispositif selon la revendication 1, 2 ou 3, dans lequel la deuxième hyperfréquence (f₂) se situe entre 10 GHz et 50 GHz, de préférence entre 10 GHz et 30 GHz.

5. Dispositif selon l'une quelconque des revendications précédentes, dans lequel la première unité de détection (11) et/ou la deuxième unité de détection (12) consiste(nt) en une unité radar à ondes entretenues modulées en fréquence, l'hyperfréquence respective (f₁, f₂) étant une fréquence moyenne.

6. Dispositif selon l'une quelconque des revendications précédentes, dans lequel ledit dispositif comprend en outre une unité d'affichage (14) pour afficher l'image.

7. Dispositif selon l'une quelconque des revendications précédentes, dans lequel l'unité de traitement (13) est agencée de manière à utiliser une différence entre les atténuations à la première et à la deuxième fréquence afin de déterminer si un objet se trouve derrière l'obstacle.

8. Dispositif selon l'une quelconque des revendications précédentes, dans lequel la première unité de détection (11) et la deuxième unité de détection (12) ont des puissances d'émission sensiblement égales.

9. Dispositif selon l'une quelconque des revendications précédentes, comprenant une troisième unité de détection agencée pour fonctionner à une troisième hyperfréquence.

10. Dispositif selon l'une quelconque des revendications précédentes, qui est un dispositif radar actif.

11. Procédé de détection d'objets (2) à travers un obstacle (5), ledit procédé comprenant les étapes consistant à :
- recevoir des ondes électromagnétiques ayant une première fréquence (f₁) réfléchies par des objets cachés par un obstacle ;
- détecter les réflexions pour former des premiers signaux de détection (S₁) ;
- recevoir des ondes électromagnétiques réfléchies ayant une deuxième fréquence (f₂) ;
- détecter les réflexions pour produire des deuxièmes signaux de détection (S₂) ;
- traiter les premiers signaux de détection (S₁) et les deuxièmes signaux de détection (S₂) de manière à détecter des objets (2, 3), et
**caractérisé en ce que** les première et deuxième fréquences sont des hyperfréquences différentes l'une de l'autre pour lesquelles l'atténuation des ondes électromagnétiques au niveau de l'obstacle est différente, l'atténuation à la première fréquence étant inférieure à celle à la deuxième fréquence ; et **en ce que** le procédé comprend les étapes consistant à
- produire, à partir des réflexions, une image des objets (2) détectés et
- ne pas faire figurer sur l'image les objets qui ont été détectés à la fois par la première et par la deuxième unité de détection.

12. Procédé selon la revendication 11, dans lequel l'obstacle est un mur, un plafond, un plancher ou une barrière cachant l'objet à la vue.

13. Procédé selon la revendication 12, dans lequel la première fréquence (f₁) se situe entre 1 GHz et 10 GHz, de préférence entre 1 GHz et 3 GHz, et la deuxième fréquence (f₂) se situe entre 10 GHz et 50 GHz, de préférence entre 10 GHz et 30 GHz.

14. Procédé selon l'une quelconque des revendications 11 à 13, dans lequel les étapes de réception des ondes hyperfréquences réfléchies ayant une première hyperfréquence (f₁) et de réception des ondes hyperfréquences réfléchies ayant une deuxième hyperfréquence (f₂) sont respectivement précédées par l'étape d'émission d'ondes hyperfréquences ayant une première hyperfréquence (f₁) et par l'étape d'émission d'ondes hyperfréquences ayant une deuxième hyperfréquence (f₂).

15. Procédé selon la revendication 14, dans lequel au moins l'une des étapes d'émission d'ondes hyperfréquences consiste à émettre des ondes entretenues modulées en fréquence, l'hyperfréquence respective (f₁, f₂) étant une fréquence moyenne.

16. Programme informatique permettant de réaliser l'étape de traitement et l'étape d'établissement du procédé selon l'une quelconque des revendications 11 à 15.
